# EUROPÄISCHE PATENTSCHRIFT

(11) **EP 4 022 711 B1**
(45) Veröffentlichungstag und Bekanntmachung des Hinweises auf die Patenterteilung: **31.07.2024**
(21) Anmeldenummer: 21711469.3
(22) Anmeldetag: 03.02.2021
(51) Int. Cl.: H01M 10/655, H01M 10/613, H01M 10/625, H01M 10/653, H01M 50/204, H01M 50/249

(54) **ANORDNUNG AUS EINER BATTERIE UND EINEM KÜHLSYSTEM MIT EINEM FÜLLELEMENT ZUR WÄRMEÜBERTRAGUNG VON DER BATTERIE AUF DAS KÜHLSYSTEM**
ARRANGEMENT CONSISTING OF A BATTERY AND A COOLING SYSTEM, COMPRISING A FILLER ELEMENT FOR HEAT TRANSFER FROM THE BATTERY TO THE COOLING SYSTEM
ENSEMBLE CONSTITUÉ D'UNE BATTERIE ET D'UN SYSTÈME DE REFROIDISSEMENT, COMPRENANT UN ÉLÉMENT DE REMPLISSAGE POUR LE TRANSFERT DE CHALEUR DE LA BATTERIE AU SYSTÈME DE REFROIDISSEMENT

(30) Priorität: 04.02.2020 DE 102020000727
(43) Veröffentlichungstag der Anmeldung: 06.07.2022
(73) Patentinhaber: GKD - Gebr. Kufferath AG, 52353 Düren (DE)
(72) Erfinder: KNEFEL, Markus, 52353 Düren (DE)
(74) Vertreter: Castell, Klaus
(86) Internationale Anmeldenummer: PCT/DE2021/000018
(87) Internationale Veröffentlichungsnummer: WO 2021/155877

(56) Entgegenhaltungen:
- EP-A1- 3 512 033
- WO-A1-2020/011833
- DE-A1- 102011 015 152
- DE-A1- 102018 112 351

## Beschreibung

Insbesondere für Elektrofahrzeuge werden große Batterien benötigt. Diese Batterien müssen gekühlt werden. Autobatterien werden in der Regel von unten gekühlt. Problematisch ist es, die Batteriezelle mit dem Gehäuse zu verbinden, da in der Regel zwischen den Zellen und der Kühlung ein Spalt mit einer gewissen Toleranz besteht. Diese Toleranz beträgt ca. 0,5 bis 5 mm und der Spalt wird mit wärmeleitfähigen Pasten bzw. Platten ausgeglichen. Diese Pasten oder Platten sind üblicherweise aus einer Polymer- oder Graphitmischung hergestellt. Als sogenannte Gapfiller werden auch Wärmeleitkleber, Grafit- und Aluminiumfolien, Schaum- und Gelfolien, einseitig und doppelseitig klebende Wärmeleitfolien, Phase Change Materials (PCM's), silikonhaltige und silikonfreie Elastomere, Kapton- und Glimmerscheiben und Aluminiumoxydmaterialien eingesetzt.

Eine Anordnung aus einer Batterie und einem Kühlsystem mit einem Füllelement zur Wärmeübertragung von der Batterie auf das Kühlsystem, bei dem das Füllelement eine aus einer planen Schicht dreidimensional verformte Schicht aufweist, ist aus der WO 2020/011833 A1 bekannt. Die DE 10 2018 112351 A1 zeigt für denselben Zweck ein Abstandsgewirk, welches metallische Elemente und/oder Kohlenstofffasern aufweist. Hierbei kann das Gewirk auch mit einer folienartigen Umhüllung versehen sein. Das Abstandsgewirk hat einen flächigen Anteil in den jeweiligen Anschlussbereichen, d.h. insbesondere oberseitig und unterseitig, einen elastischen Anteil zwischen den Anschlussbereichen und eine möglichst direkte und gerichtete wärmeleitende Verbindung zwischen den Anschlussbereichen, sodass mit Hilfe des Abstandsgewirkes eine gut wärmeleitende Anbindung hergestellt werden kann. Fasern aus Metall, wärmeleitende Drähte oder Kohlenstofffasern oder textile Hohlfaserstrukturen ermöglichen eine gut wärmeleitende Verbindung und eine elastische Verbindung zwischen der Oberseite und der Unterseite.

Die DE 10 2011 015152 A1 zeigt zwei miteinander verbundene Aluminiumschalen, die einen Innenraum begrenzen, der mit einem Dämmstoff wie beispielsweise auch mit Moosgummi oder mit Luft gefüllt sein kann. Diese Aluminiumschalen dienen der elektrischen Leitung von Strom zwischen Batteriezellen. Da ein im Querschnitt linsenförmiger Innenraum den Wärmeübergang an den Grenzflächen verschlechtert, wird vorgeschlagen, zwischen zwei ebenen Platten mit guter Anlagefläche eine Balgstruktur vorzusehen. Dies ist jedoch aufwändig in der Herstellung.

Die EP 3 512 033 B1 beschreibt beabstandete zwischen Batteriezellen und einem Kühlsystem angeordnete rohrförmige Grundkörper, die sich bei einem Druck auf den Grundkörper so verformen, dass ein im Querschnitt kreisförmiger Hohlraum im Grundkörper zu einem Spalt verformt wird. Diese Grundkörper sind mit einem Metallband so umwickelt, dass sich beim Umwickeln die Form des Grundkörpers nicht verändert und bei einem Druck auf den Grundkörper das Material des Grundkörpers in den Zwischenraum zwischen den Bandspiralen hinein erstrecken kann.

Der Erfindung liegt die Aufgabe zugrunde, eine Anordnung aus einer Batterie und einem Kühlsystem mit einem Füllelement zur Wärmeübertragung von der Batterie auf das Kühlsystem, wobei das Füllelement eine aus einer planen Schicht dreidimensional verformte Schicht aufweist, weiterzubilden.

Diese Aufgabe wird mit einer Anordnung nach Anspruch 1 gelöst. Vorteilhafte Weiterbildungen sind Gegenstand der Unteransprüche.

Eine plane Schicht kann zuerst derart dreidimensional verformt werden, dass sie beim Einbau als Füllelement (Gapfiller) zwischen Batterie und Kühlsystem sich derart verformen kann, dass die dreidimensional verformte Schicht sowohl an der Batterie als auch am Kühlsystem gut anliegt, um einen guten Wärmeübergang zu ermöglichen. Die verformte Schicht ist leicht komprimierbar und aus wärmeleitendem Material, um den

Je nach Einsatzzweck ist das Füllelement plastisch und/oder elastisch verformbar. Es kann vorzugsweise auch teilweise plastisch verformbar sein und auch nach der Verformung noch elastisch sein, um auch bei Schwingungen zwischen Batterie und Kühlsystem die sich verändernde Spaltbreite zu füllen, ohne dass der Wärmeübergang wesentlich beeinträchtigt wird.

Es ist vorgesehen, dass das Füllelement mindestens eine abgeschlossene Kammer aufweist. Die Kammer kann auch wie eine gefüllte Teigtasche ausgebildet sein. Erfindungsgemäß ist ein länglicher Moosgummikörper mit einem Kupfermaterial umgeben. Dabei werden mehrere längliche mit einem Kupfermaterial umgebene Moosgummikörper nebeneinander zwischen Batteriezelle und Gehäuse angeordnet.

Zur Verbesserung des Wärmeübergangs zwischen dem Füllelement und der Batterie und/oder dem Kühlsystem wird vorgeschlagen, eine Wärmeleitpaste oder einem Wärmeleitkleber zwischen den Materialien anzuordnen.

Ein Ausführungsbeispiel der Erfindung ist in der Zeichnung dargestellt. Es zeigt
- Figur 1: eine dreidimensionale Ansicht eines Fahrzeugchassis mit Batteriezellen,
- Figur 2: eine Schnittdarstellung eines Batteriesysteme mit Füllelement
- Figur 3: ein nicht erfindungsgemäßes Z-förmig gefaltetes Kupfergewebe,
- Figur 4: ein nicht erfindungsgemäßes wellenförmig gebogenes Kupferblech,
- Figur 5: eine nicht erfindungsgemäße metallische Grundfläche mit einer darauf angebrachten noppenartig geformten zweiten Wärmeleitschicht,
- Figur 6: eine nicht erfindungsgemäße metallische Grundfläche mit darin geprägten quadratischen Erhebungen,
- Figur 7: einen Schnitt durch mit Kupferfolie umhüllte Moosgummikörper,
- Figur 8: eine Draufsicht auf die in Figur 7 gezeigten Moosgummikörper,
- Figur 9: einen Schnitt durch eine nicht erfindungsgemäße kammartig verformte Folie,
- Figur 10: eine Draufsicht auf eine nicht erfindungsgemäße Metallfolie mit länglichen Erhebungen,
- Figur 11: die Vorder- und die Rückseite einer nicht erfindungsgemäßen Folie mit unregelmäßig geformten Erhebungen,
- Figur 12: eine Draufsicht auf eine nicht erfindungsgemäße Folie mit schuppenförmigen Erhebungen und
- Figur 13: einen Schnitt durch eine wellenförmig gebogene nicht erfindungsgemäße Folie mit mäanderartigen Hinterschneidungen.

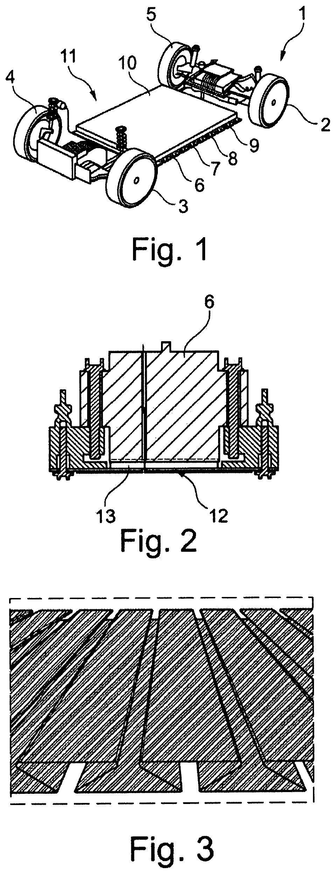

Das in Figur 1 gezeigte Chassis 1 hat Räder 2 bis 5 eines weiter nicht gezeigten Fahrzeugs. Auf den Chassis 1 liegen fünf Batteriezellen 6 bis 10 einer Batterie 11. Zwischen diesen Batteriezellen 6 bis 10 und dem Chassis 1 ist ein Kühlsystem 12 angeordnet. Um die Wärme der Batterie 12 an das Kühlsystem 12 zu übertragen, liegt zwischen den Batteriezellen 6 bis 10 und dem Kühlsystem 12 ein Füllelement 13, das auch als Gapfiller bezeichnet wird. Mechanische Halterungen pressen die Batteriezellen 6 bis 10 gegen das Füllelement 13 und das Füllelement 13 gegen das Kühlsystem 12.

Dieses Füllelement 13 weist eine aus einer planen Schicht dreidimensional verformte Schicht auf, die unterschiedlich ausgestaltet sein kann und aus unterschiedlichen wärmeleitfähigen Materialien hergestellt sein kann. Eine Schnittdarstellung eines Batteriesystems mit Füllelement 13 ist in der Figur 2 gezeigt.

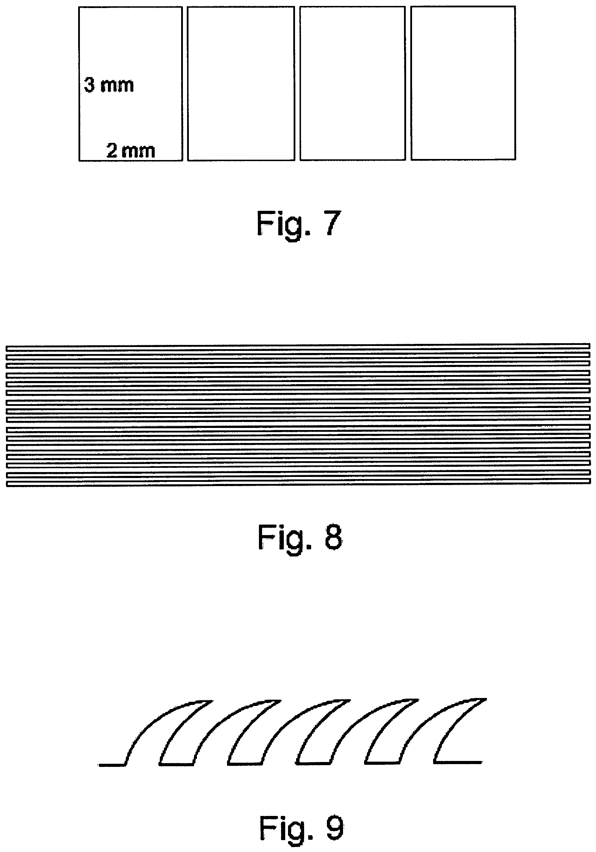

Vorteilhafte Ausführungsvarianten eines erfindungsgemäßen Füllelements sind in den Figuren 7 und 8 dargestellt. Nicht erfindungsgemäße Ausführungen eines Füllelements sind in den Figuren 3 bis 6 und 9 bis 11 dargestellt. Dabei sollen die Figuren nur prinzipiell die Möglichkeiten zur Herstellung derartiger Füllelemente zeigen. Alle gezeigten Strukturen können auch spiegelsymmetrisch oder asymmetrisch, verzerrt und in beliebigen Kombinationen ausgeführt werden.

Die Figur 3 zeigt ein im Schnitt Z-förmig gefaltetes Kupfergewebe, das zwischen Batterie und Kühlsystem gelegt werden kann und teilweise plastisch und teilweise elastisch verformbar ist, um einen guten Wärmeübergang zu gewährleisten.

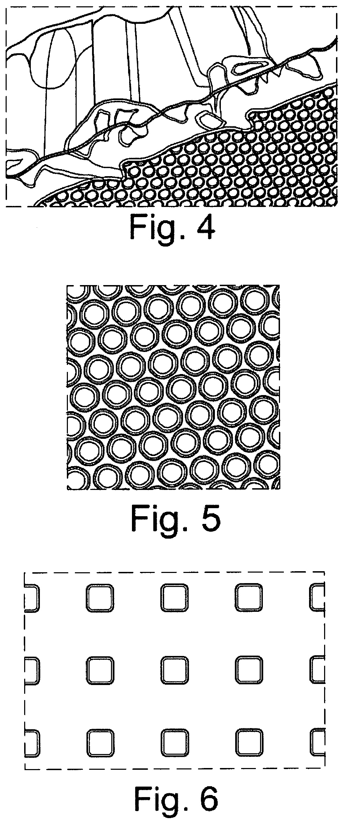

Die Figur 4 zeigt ein wellenförmig verformtes Kupferblech. Ein derartiges Blech kann als einzelnes Wellenblech oder als Wellenblechstapel als Füllelement eingesetzt werden. Bei einem Stapel können die im Querschnitt wellenförmigen Bleche derart aufeinander gelegt werden, dass jeweils ein Wellental auf einem Wellenberg liegt, um einen großen Abstand zu überbrücken.

Die Figur 5 zeigt ein nicht erfindungsgemäßes Ausführungsbeispiel, das als Noppenfolie zur Polsterung im Verpackungsbereich bekannt ist. Bei dieser Noppenfolie werden jedoch wärmeleitfähige Schichten miteinander verbunden, wobei zwischen den Schichten Luftpolster oder eine Flüssigkeit vorgesehen sind, die eine sich an die Formgebung des Spaltes anpassende Gestaltung des Füllelementes ermöglichen.

Die Figur 6 zeigt ein Füllelement mit in eine Metallplatte geprägten im nicht erfindungsgemäßen Ausführungsbeispiel quadratischen Erhebungen, die sich beim Einsatz des Füllelements verformen können.

Die Figur 7 zeigt, wie im Querschnitt rechteckige Grundkörper, die im Ausführungsbeispiel als Moosgummikörper ausgebildet sind, mit einer Kupferfolie umgeben werden können, damit der Grundkörper die Funktion der elastischen und/oder plastischen Verformung übernehmen kann, während die Kupferfolie oder eine andere besonders leitfähige Folie die Funktion der Wärmeleitung übernimmt. Der im Ausführungsbeispiel im Querschnitt rechteckige Grundkörper kann auch eine andere Querschnittsform wie beispielsweise einen Kreis, ein Oval oder einen Stern aufweisen. Außerdem kann auch der Grundkörper hohl ausgebildet sein.

Die Figur 8 zeigt, wie diese mit einem leitfähigen Material umgebenen verformbaren Grundkörper nebeneinander angeordnet werden können, um eine plane Auflagefläche zu bilden. Die mit dem leitfähigen Material umgebenen Grundkörper können aber beliebig lang sein und entweder wie Fäden geordnet nebeneinander, übereinander, verstrickt oder verwebt angeordnet sein oder auch als Fäden geordnet, gepresst oder verknäult oder auch als kurze Fadenabschnitte eine Auflagefläche bilden.

Die Figur 9 zeigt eine im Querschnitt kammförmige Gestaltung einer speziellen Prägung eines Metallblechs.

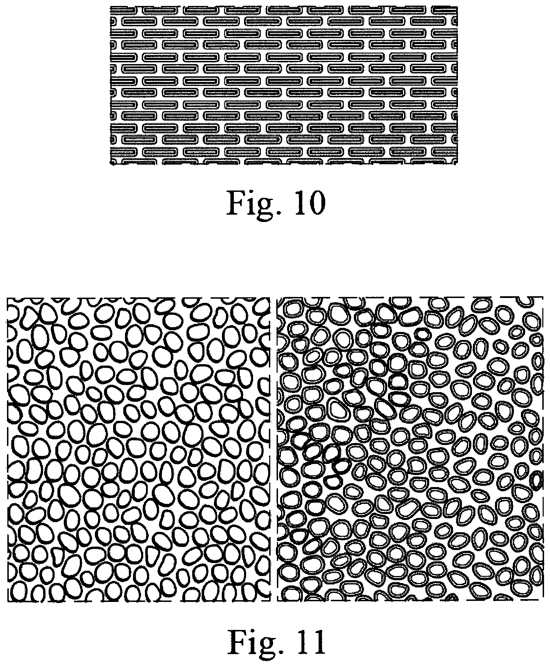

Die Figur 10 zeigt längliche versetzt zueinander angeordnete Erhebungen in einem Metallblech und die Figur 11 zeigt unregelmäßig geformte Erhebungen in einem Metallblech, die durch eine spezielle Prägung entstehen.

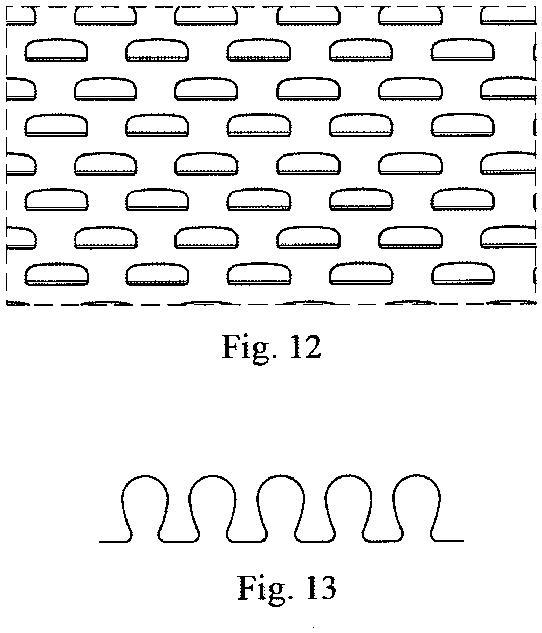

Die in Figur 12 gezeigte Prägung führt zu schuppenartigen Erhebungen, durch die das Blech teilweise gelocht wurde.

Dadurch entstehen je nach Schnitt und Verformung unterschiedliche Schnittlinien. Die Figur 13 zeigt beispielsweise eine mäandrierende Linie, die einen Schnitt durch einen Füllkörper darstellt, der speziell verformt wurde.

Die Ausführungsbeispiele zeigen, dass es eine Vielzahl an Verformungsmöglichkeiten gibt, um eine zunächst plane Schicht aus einer Folie, einem Gewebe oder einem anderen im Wesentlichen zweidimensionalen Material so zu verformen, dass eine dreidimensional verformte Schicht entsteht. Diese dreidimensionalen verformten Schichten können entweder als Einzelschicht oder als Schichtpaket verwendet werden, wenn sie als Füllelement zwischen einer Batterie und einem Kühlsystem eingesetzt werden.

## Patentansprüche

1. Anordnung aus einer Batterie und einem Kühlsystem mit einem Füllelement zur Wärmeübertragung von der Batterie auf das Kühlsystem, wobei das Füllelement eine aus einer planen Schicht dreidimensional verformte Schicht aufweist, ***dadurch gekennzeichnet, dass*** das Füllelement als Grundkörper mehrere längliche Moosgummikörper aufweist, die einen Kreis als Querschnittsform aufweisen und mit einem Kupfermaterial oder einer anderen wärmeleitfähigen Folie so umgeben sind, dass eine abgeschlossene Kammer entsteht, und nebeneinander zwischen Batteriezelle und Gehäuse angeordnet sind..

2. Anordnung nach Anspruch 1, ***dadurch gekennzeichnet, dass*** die Folie eine Kupferfolie ist.

3. Anordnung nach einem der vorhergehenden Ansprüche, ***dadurch gekennzeichnet, dass*** das Füllelement einen Spalt zwischen Batterie und Kühlsystem mit einer Dicke von 0,5 bis 5 mm überbrückt.

4. Anordnung nach einem der vorhergehenden Ansprüche, ***dadurch gekennzeichnet, dass*** das Füllelement teilweise plastisch verformbar ist und auch nach der Verformung noch elastisch ist, um auch bei Schwingungen zwischen Batterie und Kühlsystem die sich verändernde Spaltbreite zu füllen, ohne dass der Wärmeübergang wesentlich beeinträchtigt wird.

5. Anordnung nach einem der vorhergehenden Ansprüche, ***dadurch gekennzeichnet, dass*** zwischen dem Füllelement und der Batterie und/oder dem Kühlsystem eine Wärmeleitpaste oder ein Wärmeleitkleber angeordnet ist.

## Claims

1. Arrangement comprising a battery and a cooling system with a filling element for heat transfer from the battery to the cooling system, wherein the filling element has a layer deformed three-dimensionally from a planar layer, ***characterized in that*** the filling element comprises a plurality of foam rubber elements as the base body, which have a circle as cross-sectional shape and are surrounded by a copper material or another heat-conductive film such that a closed chamber is formed and are arranged next to one another between battery cell and housing.

2. Arrangement according to Claim 1, ***characterized in that*** the film is a copper film.

3. Arrangement according to one of the preceding claims, ***characterized in that*** the filling element bridges a gap between battery and cooling system with a thickness of 0.5 to 5 mm.

4. Arrangement according to one of the preceding claims, ***characterized in that*** the filling element is partially plastically deformable and is still elastic after deformation in order to fill the varying gap width in the event of vibrations between battery and cooling system without the heat transfer being substantially impaired.

5. Arrangement according to one of the preceding claims, ***characterized in that*** a heat-conductive paste or a heat-conductive adhesive is arranged between the filling element and the battery and/or the cooling system.

## Revendications

1. Ensemble constitué d'une batterie et d'un système de refroidissement avec un élément de remplissage pour le transfert de chaleur de la batterie au système de refroidissement, sachant que l'élément de remplissage comporte une couche déformée en trois dimensions à partir d'une couche plane, ***caractérisé en ce que*** l'élément de remplissage comporte plusieurs corps de caoutchouc mousse longitudinaux, qui comportent un cercle en tant que section transversale et sont entourés d'un matériau à base de cuivre ou d'une autre feuille thermoconductrice de telle manière qu'il se crée une chambre fermée et sont disposés les uns à côté des autres entre la cellule de batterie et le boîtier.

2. Ensemble selon la revendication 1, ***caractérisé en ce que*** la feuille est une feuille de cuivre.

3. Ensemble selon l'une quelconque des revendications précédentes, ***caractérisé en ce que*** l'élément de remplissage relie un espace entre la batterie et le système de refroidissement avec une épaisseur de 0,5 à 5 mm.

4. Ensemble selon l'une quelconque des revendications précédentes, ***caractérisé en ce que*** l'élément de remplissage peut être plastiquement déformé en partie et est également encore élastique après la déformation pour remplir également lors d'oscillations la largeur d'espace variant entre la batterie et le système de refroidissement.

5. Ensemble selon l'une quelconque des revendications précédentes, ***caractérisé en ce qu*'**une pâte thermoconductrice ou une colle thermoconductrice est disposée entre l'élément de remplissage et la batterie et/ou le système de refroidissement.
